# FASCICULE DE BREVET EUROPEEN

(11) **EP 3 450 363 B1**
(45) Date de publication et mention de la délivrance du brevet: **11.11.2020**
(21) Numéro de dépôt: 18191819.4
(22) Date de dépôt: 30.08.2018
(51) Int. Cl.: B65G 67/24, B65F 9/00, B65G 69/28

(54) **QUAI SÉCURISÉ DE DÉCHARGEMENT DES DÉCHETS DEPUIS UN VÉHICULE DANS UN CENTRE DE STOCKAGE**
GESICHERTE RAMPE ZUM ENTLADEN VON ABFALL AUS EINEM FAHRZEUG IN EINER LAGEREINRICHTUNG
SECURE DOCK FOR UNLOADING WASTE FROM A VEHICLE IN A STORAGE CENTRE

(30) Priorité: 30.08.2017 FR 1758001
(43) Date de publication de la demande: 06.03.2019
(73) Titulaire: Scylla, 39100 Dole (FR); Entreprise Moderne de Terrassement et d'Agregats, 92000 Nanterre (FR)
(72) Inventeur: CHERONT, Arnaud, 21200 Beaune (FR); PISAREK, Arnaud, 78270 Mousseaux sur Seine (FR)
(74) Mandataire: Oudin, Stéphane

(56) Documents cités:
- AT-B- 365 297
- DE-A1- 2 924 383
- FR-A1- 2 796 370
- FR-A1- 3 001 722
- JP-A- 2004 059 158

## Description

### Domaine technique

La présente invention concerne un quai sécurisé de déchargement de déchets ménagers depuis un véhicule dans un centre de stockage comportant au moins une fosse.

### Technique antérieure

De nos jours, de grands volumes de déchets, notamment ménagers, sont amassés dans des centres de stockage comportant au moins une fosse, en attendant leur prise en charge par des centres de traitements et/ou d'incinération.

Les centres de stockage sont avantageusement munis de quais de déchargement surplombant la fosse de stockage pour permettre le déchargement des déchets dans ladite fosse. Compte tenu des dimensions des fosses, ces quais de déchargement sont de préférence mobiles pour permettre de décharger les déchets sur toute la longueur des fosses. De tels quais comportent classiquement une plaque d'acier disposée perpendiculairement au bord de la fosse et dont la partie arrière vient en appui contre une longrine bétonnée disposée le long dudit bord, ladite longrine définissant un rebord servant de butée d'arrêt aux camions remplis de déchets afin de prévenir la chute desdits camions dans la fosse.

Ainsi, pour décharger les déchets, un camion, dont la benne est remplie de déchets et comporte une ou deux porte(s) arrière articulée(s) au niveau de sa partie arrière, est amené par un conducteur en marche arrière sur la partie avant de la plaque du quai de déchargement. Ensuite pour permettre le déversement des déchets, le conducteur doit descendre du camion pour aller ouvrir en toute sécurité la ou les porte(s) du camion. Enfin, le conducteur doit remonter dans le camion pour le faire reculer jusqu'à ce que au moins l'une de ses roues arrière viennent en butée contre le rebord du quai de déchargement afin d'effectuer le déversement des déchets dans la fosse, généralement par basculement de la benne.

Toutefois, pour gagner du temps, le conducteur ne respecte pas la manœuvre en trois phases précédemment décrite (approche, ouverture des portes, et recul jusqu'au rebord pour déversement) et il recule directement jusqu'à ce que les roues arrière du camion viennent en butée contre le rebord du quai de déchargement. Ensuite, en équilibre sur la longrine, le conducteur ouvre la ou les porte(s) du camion. Ce type de manœuvre est particulièrement dangereux car le conducteur peut tomber dans la fosse et les déchets comprimés dans la benne peuvent, lors de l'ouverture des portes, lui tomber dessus, l'ensevelir et provoquer sa mort par asphyxie.

Pour résoudre en partie cet inconvénient, on connaît déjà des centres de stockage munis de tapis élévateur tels que celui décrit dans la demande de brevet FR 3 001 722, qui divulgue un quai selon le préambule de la revendication 1, ou des quais de déchargement mobiles ou fixes munis de portes motorisées. Toutefois, ce type de quais de déchargement nécessite un apport en énergie électrique qui peut être problématique au bord de la fosse d'un centre de stockage.

### Exposé de l'invention

Le but de la présente invention est donc de pallier les inconvénients précédemment cités et de proposer un quai de déchargement mobile facile à mettre en œuvre, ne nécessitant aucun apport en énergie électrique et interdisant toute ouverture de la ou des porte(s) arrière du camion lorsque ses roues sont en appui contre les butées ou rebords dudit quai de déchargement afin d'éviter toute chute du conducteur.

A cet égard, il est donc proposé un quai sécurisé de déchargement pour véhicule remarquable en ce qu'il comporte :
- un socle en forme générale de parallélépipède aplati et muni d'une barrière longitudinale de sécurité fixe le long d'au moins la partie arrière de chacun de ses bords longitudinaux, et d'au moins une première barrière transversale de sécurité montée pivotante au niveau de son bord latéral arrière, ladite première barrière transversale étant mobile entre une position "fermée" où elle obture au moins en partie l'extrémité arrière du socle définie par l'extrémité arrière des deux barrières longitudinales et ledit bord latéral arrière et une position "ouverte" où elle dégage ladite extrémité arrière,
- un plancher disposé sur le dessus du socle, et comprenant au moins une portion médiane agencée pour être mobile, lorsqu'un véhicule roule dessus, entre une position "sortie" dans laquelle elle se situe au moins en partie au-dessus de la face supérieure du plancher et une position "rentrée" dans laquelle elle se situe au voisinage de ladite face supérieure, et
- des moyens d'entraînement exclusivement du type mécanique reliant la portion médiane à la première barrière transversale de sorte que le déplacement de ladite portion médiane de sa position "sortie" à sa position "rentrée" entraine le mouvement de ladite première barrière transversale de sa position "fermée" à sa position "ouverte", et inversement.

Pour passer de sa position "sortie" à sa position "rentrée", la portion médiane se déplace de préférence parallèlement à elle-même de l'avant vers l'arrière du quai 1 et de haut en bas, et inversement pour passer de sa position '"rentrée" à sa position' "sortie".

Selon un mode de réalisation préféré, le quai comporte au moins un premier bras articulé autour d'un axe horizontal à l'une de ses extrémités au bord latéral avant de la portion médiane et à son autre extrémité à l'avant du plancher, et un deuxième bras articulé autour d'un axe horizontal à l'une de ses extrémités au bord latéral arrière de la portion médiane et à son autre extrémité à l'arrière du plancher, de manière à ce que les centres des articulations situées aux extrémités des premier et deuxième bras déterminent les sommets d'un parallélogramme déformable.

Le quai comporte avantageusement des moyens de rappel configurés pour que la portion médiane soit normalement en position "sortie".

Ainsi, selon un mode de réalisation préféré, les moyens d'entraînement comportent au moins un premier levier solidaire de l'un des premier ou deuxième bras de la portion médiane du plancher, un deuxième levier solidaire de la première barrière transversale et s'étendant perpendiculairement à l'axe de rotation de cette dernière, et une première bielle articulée à chacune de ses extrémités respectivement auxdits premier et deuxième leviers.

Selon une variante de réalisation, le quai comporte une deuxième barrière transversale montée pivotante sur le socle en vis-à-vis de la première barrière transversale, et les moyens d'entraînement comportent en outre un troisième levier solidaire de la deuxième barrière transversale et s'étendant perpendiculairement à l'axe de rotation de cette dernière, et une deuxième bielle articulée à chacune de ses extrémités respectivement auxdits deuxième et troisième leviers.

Chacune des première et/ou deuxième bielles est avantageusement associée à un organe d'amortissement garantissant une ouverture/fermeture sans à-coup des premières et/ou deuxièmes barrières transversales, afin d'éviter tout endommagement de ces derrières.

De manière préférée, chacune des première et/ou deuxième bielles est séparée en deux parties et l'organe d'amortissement associé comporte un organe élastiquement déformable reliant entre elles lesdites deux parties et assurant une transmission du mouvement moins brutale entre les leviers et les bielles.

Le socle et les barrières longitudinales sont dimensionnés de manière à ce que, lorsqu'un véhicule est sur le quai, le conducteur du véhicule ne puisse pas passer entre le véhicule et les barrières longitudinales.

### Description sommaire des figures

D'autres avantages et caractéristiques ressortiront mieux de la description qui va suivre de plusieurs variantes d'exécution, données à titre d'exemples non limitatifs, d'un quai sécurisé de déchargement conforme à l'invention, en référence aux dessins dans lesquels :
- la figure 1 est une vue en coupe longitudinale d'un quai sécurisé de déchargement selon l'invention avec sa ou ses barrières transversales en position "fermée",
- la figure 2 est une vue en coupe longitudinale partielle du quai sécurisé de déchargement de la figure 1 avec sa ou ses barrières transversales en position "ouverte",
- la figure 3 est une vue de détail partielle en perspective agrandie du quai sécurisé de déchargement de la figure 1 avec ses barrières transversales en position "fermée".

### Meilleure manière de réaliser l'invention technique

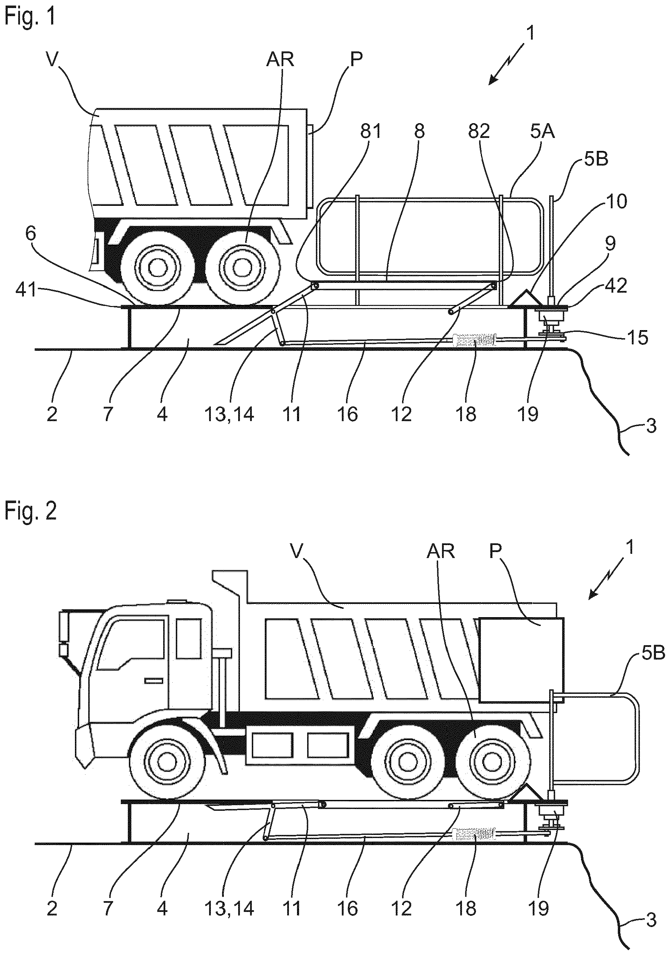

En référence aux figures 1 à 3, le quai 1 sécurisé de déchargement selon l'invention est disposé de façon amovible sur une surface 2 sensiblement plane et s'étendant en partie au-dessus d'une fosse 3 d'un centre de stockage de déchets ménagers, ledit quai 1 étant de préférence disposé de manière à ce que son axe longitudinal soit sensiblement perpendiculaire au bord de ladite fosse 3.

Ledit quai 1 comporte un socle 4 en forme générale de parallélépipède aplati et muni d'une barrière longitudinale 5A de sécurité fixée, de façon permanente ou démontable, le long d'au moins la partie arrière de chacun de ses bords longitudinaux, d'une rampe d'accès (non représentée sur les figures) le long de son bord latéral avant 41, ladite rampe d'accès étant configurée pour permettre à un véhicule V rempli de déchets de monter sur ledit quai 1, et d'au moins une première barrière transversale 5B de sécurité montée pivotante au niveau de son bord latéral arrière 42, ladite première barrière transversale 5B étant mobile entre une position "fermée" où elle obture au moins en partie l'extrémité arrière du socle 4 définie par l'extrémité arrière des deux barrières longitudinales 5A et ledit bord latéral arrière 42 de sorte à interdire l'ouverture des portes arrières du véhicule V et le déversement des déchets contenus dans ledit véhicule V, et une position "ouverte" où elle dégage ladite extrémité arrière de sorte à permettre le déversement des déchets.

On désigne ici par "avant" les éléments ou partie d'éléments du quai 1 situés du côté par lequel le véhicule V monte sur ce dernier et par "arrière" les éléments du quai 1 situés du côté opposé.

Selon un mode de réalisation préféré, la première barrière transversale 5B est montée pivotante sur le socle 4, à l'une des extrémités de son bord latéral arrière 42, autour d'un axe sensiblement vertical et perpendiculaire audit bord latéral arrière 42 du socle 4.

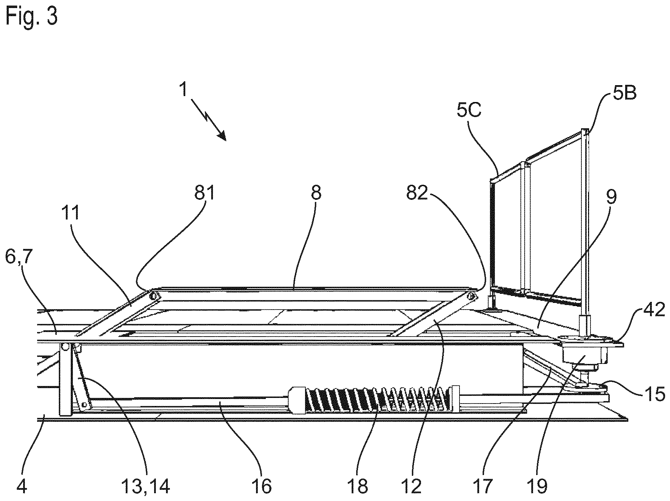

Selon un mode de réalisation encore plus préféré, le quai 1 sécurisé de déchargement selon l'invention comporte une première barrière transversale 5B et une deuxième barrière 5C (Cf. figure 3), chacune étant montée pivotante sur le socle 4, à l'une des extrémités de son bord latéral arrière 42, autour d'un axe sensiblement vertical et perpendiculaire audit bord latéral arrière 42.

Il va de soi que la ou les première et deuxième barrières 5B,5C pourront être montées pivotantes sur le socle 4 autour d'un axe sensiblement horizontal parallèle audit bord latéral arrière 42, sans sortir du cadre de la présente invention.

Le socle 4 comporte en outre sur sa face supérieure 43 un plancher 6 comprenant, successivement suivant une direction allant du bord latéral avant 41 au bord latéral arrière 42 dudit socle 4, une portion avant 7 fixe, une portion médiane 8 mobile et un portion arrière 9 fixe supportant au moins une butée 10 servant d'arrêt au véhicule V rempli de déchets lorsqu'il recule sur le quai 1 afin d'éviter une chute dans la fosse 3 du centre de stockage de déchets.

La portion médiane 8 est mobile entre une position "sortie" dans laquelle elle se situe au moins en partie au-dessus de la face supérieure du plancher 6 défini par les faces supérieures de ses portions avant et arrière 7,9, et une position "rentrée" dans laquelle elle se situe au voisinage de ladite face supérieure du plancher 6.

On désigne ici par "au voisinage de ladite face supérieure du plancher 6" le fait que, lorsque la portion médiane 8 est en position "rentrée", elle se situe soit dans l'alignement des portions avant et arrière 7,9 de sorte à obtenir une face supérieure du plancher 6 parfaitement plane, soit en appui sur lesdites portions avant et arrière 7,9.

Selon un mode de réalisation avantageux, la portion médiane 8 est avantageusement étroite et ne s'étend pas sur toute la largeur du plancher 6 de manière à ne coopérer qu'avec les roues arrière AR du véhicule V situées d'un seul côté de ce dernier (le côté conducteur dans l'exemple de réalisation décrit).

Toutefois, il va de soi que la portion médiane 8 pourra s'étendre sur toute la largeur du plancher 6 de manière à coopérer avec toutes les roues arrière AR du véhicule V, sans sortir du cadre de la présente invention.

La portion médiane 8 est normalement en position "sortie", c'est-à-dire que lorsque le quai 1 n'a pas de véhicule V sur son plancher 6 et plus particulièrement sur la portion médiane 8 dudit plancher 6, ladite portion médiane 8 est en position "sortie".

Pour cela, le quai 1 sécurisé comprend des moyens de rappel, non représentés sur les figures, qui sont de préférence des ressorts hélicoïdaux de compression disposés entre la portion médiane 8 et le socle 4 et étant aptes à exercer un effort vertical ascendant pour maintenir ladite portion médiane 8 en position "sortie". Ainsi, lorsqu'un véhicule V recule sur le quai 1 et roule sur la portion médiane 8, les moyens de rappel se compriment et la portion médiane 8 vient se positionner dans sa position "rentrée". A l'inverse, lorsqu'un véhicule V quitte le quai 1 et libère la portion médiane 8, les moyens de rappel se détendent et la portion médiane 8 revient se positionner dans sa position "sortie".

Selon le mode de réalisation avantageux décrit, pour passer de sa position "sortie" à sa position "rentrée", la portion médiane 8 se déplace parallèlement à elle-même de l'avant vers l'arrière du quai 1 et de haut en bas (Cf. figures 1 et 2). A l'inverse, pour passer de sa position "sortie" à sa position "rentrée", la portion médiane 8 se déplace parallèlement à elle-même de l'arrière vers l'avant du quai 1 et de bas en haut.

Pour ce faire, le quai 1 comporte au moins un premier bras 11 articulé autour d'un axe horizontal à l'une de ses extrémités au bord latéral avant 81 de la portion médiane 8 et à son autre extrémité à la portion avant 7 située à l'avant du socle 6, et un deuxième bras 12 articulé autour d'un axe horizontal à l'une de ses extrémités au bord latéral arrière 82 de la portion médiane 8 et à son autre extrémité à l'arrière du socle 6, de manière à ce que les centres des articulations situées aux extrémités des premier et deuxième bras 11,12 déterminent les sommets d'un parallélogramme déformable.

Selon le mode de réalisation avantageux décrit, le quai 1 comporte deux premiers bras 11 parallèles entre eux et disposés respectivement à proximité de chaque extrémité du bord latéral avant 81 de la portion médiane 8, et deux deuxièmes bras 12 parallèles entre eux et disposés respectivement à proximité de chaque extrémité du bord latéral arrière 82 de la portion médiane 8.

Toutefois, il va de soi que, selon un mode de réalisation non représenté, la portion médiane 8 pourra être montée pivotante, par exemple, sur la portion avant 7 du plancher 6 du socle 4 autour d'un axe sensiblement horizontal, sans sortir du cadre de la présente invention.

Pour faire pivoter la première barrière transversale 5B, le quai 1 comporte en outre des moyens d'entraînement 13 reliant la portion médiane 8 à la première barrière transversale 5B de sorte que le déplacement de ladite portion médiane 8 de sa position "sortie" à sa position "rentrée" entraine le mouvement de la ou des deuxièmes barrières 5B de leur position "fermée" à leur position "ouverte", et inversement.

Pour des raisons de sécurité, les moyens de rappel, précédemment décrits, sont dimensionnés pour n'autoriser le mouvement de la portion médiane 8 que sous l'action d'une charge suffisamment importante afin d'éviter que le poids de quelques individus puisse entrainer l'ouverture de la première barrière transversale 5B du quai 1.

Avec cette configuration desdits moyens d'entraînement 13, on comprend bien que la première barrière transversale 5B est normalement en position "fermée" puisque, comme évoqué précédemment, la portion médiane 8 est normalement en position "sortie", lorsque le quai 1 n'a pas de véhicule V sur son plancher 6 et plus particulièrement sur la portion médiane 8 dudit plancher 6. Cette configuration garantit de manière évidente la sécurité du quai 1 évitant par exemple qu'un ouvrier tombe dans la fosse 3.

Lesdits moyens d'entraînement 13 comportent de préférence au moins un premier levier 14 solidaire de l'un des premier ou deuxième bras 11,12 de la portion médiane 8 du plancher 6, un deuxième levier 15 solidaire de la barrière 5B et s'étendant perpendiculairement à l'axe de rotation de cette dernière, et une première bielle 16 articulée à chacune de ses extrémités respectivement auxdits premier et deuxième leviers 14, 15.

Ainsi avec cette configuration des moyens d'entrainement 13, lorsque la portion médiane 8 passe de "sortie" à sa position "rentrée" sous l'action d'un véhicule V, le premier levier 14 pivote autour de l'axe de rotation du premier ou deuxième bras 11,12 par rapport respectivement à la portion avant 7 ou arrière9 du plancher 6, la première bielle 16 se déplace alors selon une direction sensiblement parallèle à l'axe longitudinal du quai 1 et coopère avec le deuxième levier 15 pour entrainer en rotation la barrière 5B associée de sa position "fermée" à sa position "ouverte", et réciproquement.

Dans le cas où le quai 1 comporte une première 5B et une deuxième 5C barrières transversale (Cf. figure 3), les moyens d'entraînement 13 comportent en outre un troisième levier, non représenté sur les figures, solidaire de la deuxième barrière transversale 5C et s'étendant perpendiculairement à l'axe de rotation de cette dernière, et une deuxième bielle 17 articulée à chacune de ses extrémités respectivement auxdits deuxième et troisième leviers 15.

Ainsi avec cette configuration complétée des moyens d'entraînement 13, lorsque la portion médiane 8 passe de "sortie" à sa position "rentrée" sous l'action d'un véhicule V, la première bielle 16 se déplace alors selon une direction parallèle à l'axe longitudinal du quai 1 et coopère avec le deuxième levier 15 pour entrainer en rotation la première barrière 5B de sa position "fermée" à sa position "ouverte", la deuxième bielle 17 se déplace alors selon une direction sensiblement perpendiculaire à l'axe longitudinal du quai 1 et coopère avec le troisième levier pour entrainer en rotation la première barrière transversale 5B associée de sa position "fermée" à sa position "ouverte", et réciproquement.

En référence à la figure 3, les deuxième et troisième leviers 15 sont de préférence des disques solidaires respectivement de leur première ou deuxième barrière transversale 5B associée, ces disques permettant d'ajuster plus facilement la position de l'articulation des première et deuxième bielles 16, 17.

Pour des raisons évidentes de sécurité par rapport à des pièces en mouvement, les moyens d'entraînement 13 sont de préférence disposés sous le plancher 6 du socle 4 du quai 1.

Par ailleurs, chacune des première et/ou deuxième bielles 16,17 est associée à un organe d'amortissement 18 garantissant une ouverture/fermeture sans à-coup des premières et/ou deuxièmes barrières transversales 5B,5C, afin d'éviter tout endommagement de ces derrières.

Pour ce faire, chacune des première et/ou deuxième bielles 16,17 est séparée en deux parties et l'organe d'amortissement 18 associé comporte un organe élastiquement déformable, par exemple, du type ressort hélicoïdal, reliant entre elles lesdites deux parties et assurant une transmission du mouvement moins brutale entre les leviers 14, 15 et les bielles 16, 17.

Enfin, la ou les barrières transversales 5B,5C comportent des dispositifs de ralentissement d'ouverture 19, afin d'éviter les chocs à la fin de leur ouverture/fermeture. L'Homme du Métier n'aura aucune difficulté à déterminer le dispositif de ralentissement d'ouverture 19 le mieux adapté en fonction des dimensions et poids de la ou des barrières 5B.

Par ailleurs, le socle 4 et les barrières longitudinales 5A sont dimensionnés de manière à ce que, lorsqu'un véhicule V est sur le quai 1 et plus particulièrement lorsque les roues arrières AR dudit véhicule V sont sur la portion médiane 8 du plancher 6 du socle 4, le conducteur du véhicule V ne puisse pas passer entre le véhicule V et les barrières longitudinales 5A pour accéder à l'arrière du véhicule V afin d'ouvrir les portes arrière de ce dernier.

Avec une telle configuration, on comprend bien que le conducteur devra ouvrir les portes de son véhicule V lorsque ce dernier est avant le quai 1 ou sur la portion avant 7 du plancher 6 du socle 4. Les barrières longitudinales 5A sont donc disposées au moins sur la partie des bords longitudinaux du socle 4 située au droit des portions médiane et arrière 8,9 du plancher 6.

Le quai 1 sécurisé selon l'invention permet donc un déchargement d'un véhicule V en toute sécurité notamment pour le conducteur. En effet, le chauffeur doit reculer son véhicule V sur le plancher 6 du quai 1 jusqu'à la fin de la portion avant 7 dudit plancher 6, descendre pour ouvrir les portes arrières P de son véhicule V, remonter dans son véhicule V pour reculer sur la portion médiane 8, ce qui déclenche l'ouverture de la première barrière transversale 5B du quai 1, jusqu'à ce que ses roues arrières AR viennent en appui sur les butées 10 de la portion arrière 9 du plancher 6. Si le conducteur recule son véhicule V jusqu'aux butées 10 sans ouvrir les portes arrières p dudit véhicule V, il ne pourra plus le faire à cause de la présence des barrières longitudinales 5A et devra alors de nouveau avancer son véhicule V.

En outre, le quai 1 et plus particulièrement le socle 4 et le plancher 6 sont dimensionnés pour que lorsque que le véhicule V est sur ledit quai 1 les roues arrière AR en appui contre les butées 10, au moins une de ses roues est en contact avec la portion médiane 8 pour la maintenir en position "rentrée" et par conséquent maintenir la première barrière transversale 5B en position "ouverte", afin de pouvoir effectuer le déchargement des déchets.

L'Homme du Métier n'aura aucune difficulté pour dimensionner les différents éléments constitutifs du quai 1 selon l'invention en fonction notamment de leur positionnement et/ou mouvement relatif.

En outre, pour faciliter la translation de la portion médiane 8 sous l'action des roues arrière AR lors du déplacement du véhicule V, cette dernière comporte avantageusement au moins une plaque guide, non représentée sur les figures, articulée le long de son bord latéral 81 avant.

Enfin, on comprend bien que le quai 1 selon l'invention est particulièrement simple et rapide à mettre en œuvre et/ou à déplacer, par exemple à l'aide d'un engin de chantier à chenille, sans apport d'énergie électrique ou similaire, puisque les moyens d'entraînement 13 sont exclusivement du type mécanique.

### Possibilité d'application industrielle

Comme décrit précédemment, le quai 1 sécurisé de déchargement, selon l'invention, s'applique plus particulièrement au déchargement dans un centre de stockage de déchets d'un véhicule V rempli de déchets. Il va de soi que le quai 1 peut également être utilisé dans tout autre type d'installations ou bâtiments pourvus d'une aire de chargement/déchargement.

Enfin, il est clair que la présente invention ne se limite pas à la seule forme d'exécution de ce quai 1 ; elle en embrasse, au contraire, toutes les variantes de réalisation et d'application respectant le même principe, qui sont couvertes par les revendications.

## Revendications

1. Quai (1) sécurisé de déchargement pour véhicule (V) comportant :
- un socle (4) en forme générale de parallélépipède aplati et muni d'une barrière longitudinale (5A) de sécurité fixe le long d'au moins la partie arrière de chacun de ses bords longitudinaux, et d'au moins une première barrière transversale (5B) de sécurité montée pivotante au niveau de son bord latéral arrière (42), ladite première barrière transversale (5B) étant mobile entre une position "fermée" où elle obture au moins en partie l'extrémité arrière du socle (4) définie par l'extrémité arrière des deux barrières longitudinales (5A) et ledit bord latéral arrière (42) et une position "ouverte" où elle dégage ladite extrémité arrière, **caractérisé en ce que** le quai comporte:
- un plancher (6) disposé sur le dessus du socle (4), et comprenant au moins une portion médiane (8) agencée pour être mobile, lorsqu'un véhicule (V) roule dessus, entre une position "sortie" dans laquelle elle se situe au moins en partie au-dessus de la face supérieure du plancher (6) et une position "rentrée" dans laquelle elle se situe au voisinage de ladite face supérieure, et
- des moyens d'entraînement (13) exclusivement du type mécanique reliant la portion médiane (8) à la première barrière transversale (5B) de sorte que le déplacement de ladite portion médiane (8) de sa position "sortie" à sa position "rentrée" entraine le mouvement de ladite première barrière transversale (5B) de sa position "fermée" à sa position "ouverte", et inversement.

2. Quai (1) selon la revendication 1 **caractérisé en ce que**, pour passer de sa position "sortie" à sa position "rentrée", la portion médiane (8) se déplace parallèlement à elle-même de l'avant vers l'arrière du quai (1) et de haut en bas , et inversement pour passer de sa position "rentrée" à sa position ' "sortie".

3. Quai (1) selon la revendication 2 **caractérisé en ce qu'**il comporte au moins un premier bras (11) articulé autour d'un axe horizontal à l'une de ses extrémités au bord latéral avant (81) de la portion médiane (8) et à l'autre extrémité à l'avant du plancher (6), et un deuxième bras (12) autour d'un axe horizontal à l'une de ses extrémités au bord latéral arrière (82) de la portion médiane (8) et à l'autre extrémité à l'arrière du plancher (6), de manière à ce que les centres des articulations situées aux extrémités des premier et deuxième bras (11,12) déterminent les sommets d'un parallélogramme déformable.

4. Quai (1) selon l'une quelconque des revendications 1 à 3 **caractérisé en ce qu'**il comporte des moyens de rappel configurés pour que la portion médiane (8) soit normalement en position "sortie".

5. Quai (1) selon l'une quelconque des revendications 1 à 4 **caractérisé en ce que** les moyens d'entraînement (13) comportent au moins un premier levier (14) solidaire de l'un des premier ou deuxième bras (11,12) de la portion médiane (8) du plancher (6), un deuxième levier (15) solidaire de la première barrière transversale (5B) et s'étendant perpendiculairement à l'axe de rotation de cette dernière, et une première bielle (16) articulée à chacune de ses extrémités respectivement auxdits premier et deuxième leviers (14, 15).

6. Quai (1) selon la revendication 5 **caractérisé en ce qu'**il comporte une deuxième barrière transversale (5C) montée pivotante sur le socle (4) en vis-à-vis de la première barrière transversale (5B), et **en ce que** les moyens d'entrainement (13) comportent en outre un troisième levier solidaire de la deuxième barrière transversale (5C) et s'étendant perpendiculairement à l'axe de rotation de cette dernière, et une deuxième bielle (17) articulée à chacune de ses extrémités respectivement auxdits deuxième et troisième leviers (15).

7. Quai (1) selon l'une quelconque des revendications 5 ou 6 **caractérisé en ce que** chacune des première et/ou deuxième bielles (16,17) est associée à un organe d'amortissement (18) garantissant une ouverture/fermeture sans à-coup des premières et/ou deuxièmes barrières transversales (5B,5C), afin d'éviter tout endommagement de ces derrières.

8. Quai (1) selon la revendication 7 **caractérisé en ce que** chacune des première et/ou deuxième bielles (16,17) est séparée en deux parties et **en ce que** l'organe d'amortissement (18) associé comporte un organe élastiquement déformable reliant entre elles lesdites deux parties et assurant une transmission du mouvement moins brutale entre les leviers (14,15) et les bielles (16,17).

9. Quai (1) selon l'une quelconque des revendications 1 à 8 **caractérisé en ce que** le socle (4) et les barrières longitudinales (5A) sont dimensionnés de manière à ce que, lorsqu'un véhicule (V) est sur le quai (1), le conducteur du véhicule (V) ne puisse pas passer entre le véhicule (V) et les barrières longitudinales (5A).

## Patentansprüche

1. Gesicherte Entladerampe (1) für ein Fahrzeug (V), umfassend:
- einen Sockel (4) in allgemein abgeflachter parallelepipedischer Form und entlang mindestens des hinteren Teils jeder seiner Längskanten mit einer festen Sicherheits-Längsbarriere (5A) und mit mindestens einer ersten Sicherheits-Querbarriere (5B) ausgestattet, die im Bereich seiner hinteren Seitenkante (42) schwenkbar montiert ist, wobei die erste Querbarriere (5B) zwischen einer "geschlossenen" Stellung, in der sie das vom hinteren Ende der zwei Längsbarrieren (5A) und der hinteren Seitenkante (42) definierte hintere Ende des Sockels (4) mindestens zum Teil versperrt, und einer "offenen" Stellung beweglich ist, in der sie das hintere Ende freigibt, **dadurch gekennzeichnet, dass** die Rampe umfasst:
- eine Bodenplatte (6), die an der Oberseite des Sockels (4) angeordnet ist und mindestens einen mittleren Abschnitt (8) umfasst, der so eingerichtet ist, dass er, wenn ein Fahrzeug (V) darüber rollt, zwischen einer "ausgefahrenen" Stellung, in der er mindestens zum Teil über der oberen Fläche der Bodenplatte (6) liegt, und einer "eingefahrenen" Stellung beweglich ist, in der er in der Nähe der oberen Fläche liegt, und
- Antriebsmittel (13) ausschließlich vom mechanischen Typ, die den mittleren Abschnitt (8) so mit der ersten Querbarriere (5B) verbinden, dass die Verlagerung des mittleren Abschnitts (8) von seiner "ausgefahrenen" Stellung zu seiner "eingefahrenen" Stellung die Bewegung der ersten Querbarriere (5B) von ihrer "geschlossenen" Stellung zu ihrer "offenen" Stellung, und umgekehrt, bewirkt.

2. Rampe (1) nach Anspruch 1, **dadurch gekennzeichnet, dass** sich der mittlere Abschnitt (8), um von seiner "eingefahrenen" Stellung zu seiner "ausgefahrenen" Stellung zu gelangen
, zu sich selbst parallel von der Vorderseite zur Rückseite der Rampe (1) und von oben nach unten verlagert, und umgekehrt, um von seiner "ausgefahrenen" Stellung zu seiner "eingefahrenen" Stellung zu gelangen.

3. Rampe (1) nach Anspruch 2, **dadurch gekennzeichnet, dass** sie mindestens einen ersten Arm (11), der an einem seiner Enden an der vorderen Seitenkante (81) des mittleren Abschnitts (8) und am anderen Ende an der Vorderseite der Bodenplatte (6) um eine horizontale Achse, und einen zweiten Arm (12) umfasst, der an einem seiner Enden an der hinteren Seitenkante (82) des mittleren Abschnitts (8) und am anderen Ende an der Rückseite der Bodenplatte (6) um eine horizontale Achse angelenkt ist, sodass die Mittelpunkte der an den Enden des ersten und zweiten Arms (11, 12) liegenden Anlenkungen die die Spitzen eines verformbaren Parallelogramms definieren.

4. Rampe (1) nach einem der Ansprüche 1 bis 3, **dadurch gekennzeichnet, dass** sie Rückstellmittel umfasst, die so konfiguriert sind, dass sich der mittlere Abschnitt (8) normalerweise in "ausgefahrener" Stellung befindet.

5. Rampe (1) nach einem der Ansprüche 1 bis 4, **dadurch gekennzeichnet, dass** die Antriebsmittel (13) mindestens einen ersten Hebel (14), der fest mit einem aus dem ersten oder zweiten Arm (11, 12) des mittleren Abschnitts (8) der Bodenplatte (6) verbunden ist, einen zweiten Hebel (15), der fest mit der ersten Querbarriere (5B) verbunden ist und sich senkrecht zur Drehachse dieser letzteren erstreckt, und einen ersten Pleuel (16) umfassen, der an jedem seiner Enden jeweils am ersten und zweiten Hebel (14, 15) angelenkt ist.

6. Rampe (1) nach Anspruch 5, **dadurch gekennzeichnet, dass** sie eine zweite Querbarriere (5C) umfasst, die der ersten Querbarriere (5B) gegenüberliegend schwenkbar am Sockel (4) montiert ist, und dadurch, dass die Antriebsmittel (13) weiter einen dritten Hebel, der fest mit der zweiten Querbarriere (5C) verbunden ist und sich senkrecht zur Drehachse dieser letzteren erstreckt, und einen zweiten Pleuel (17) umfassen, der an jedem seiner Enden jeweils am zweiten und dritten Hebel (15) angelenkt ist.

7. Rampe (1) nach einem der Ansprüche 5 oder 6, **dadurch gekennzeichnet, dass** jeder aus dem ersten und/oder zweiten Pleuel (16, 17) mit einem Dämpfungsglied (18) verknüpft ist, das ein ruckfreies Öffnen/Schließen der ersten und/oder zweiten Querbarrieren (5B, 5C) gewährleistet, um jede Beschädigung dieser letzteren zu verhindern.

8. Rampe (1) nach Anspruch 7, **dadurch gekennzeichnet, dass** jeder aus dem ersten und/oder zweiten Pleuel (16, 17) in zwei Teile geteilt ist, und dadurch, dass das verknüpfte Dämpfungsglied (18) ein elastisch verformbares Glied umfasst, das die zwei Teile untereinander verbindet und eine weniger abrupte Übertragung der Bewegung zwischen den Hebeln (14, 15) und den Pleueln (16, 17) sicherstellt.

9. Rampe (1) nach einem der Ansprüche 1 bis 8, **dadurch gekennzeichnet, dass** der Sockel (4) und die Längsbarrieren (5A) so dimensioniert sind, dass, wenn sich ein Fahrzeug (V) auf der Rampe (1) befindet, der Fahrer des Fahrzeugs (V) nicht zwischen das Fahrzeug (V) und die Längsbarrieren (5A) gelangen kann.

## Claims

1. Secure unloading dock (1) for a vehicle (V) comprising:
- a base (4) having the overall shape of a flattened parallelepiped and provided with a longitudinal safety barrier (5A) fixed along at least the rear part of each of the longitudinal edges thereof, and at least one first transverse safety barrier (5B) mounted such that it can pivot at the rear lateral edge (42) thereof, said first transverse barrier (5B) being capable of moving between a "closed" position in which it at least partially blocks the rear end of the base (4) defined by the rear end of the two longitudinal barriers (5A) and said rear lateral edge (42), and an "open" position in which it releases said rear end, **characterised in that** the dock comprises:
- a floor (6) disposed on the top of the base (4), and including at least one median portion (8) arranged such that it can move, when a vehicle (V) drives thereon, between an "extended" position in which it is at least partially located above the top face of the floor (6) and a "retracted" position in which it is located in the vicinity of said top face, and
- drive means (13) exclusively of the mechanical type, connecting the median portion (8) to the first transverse barrier (5B) such that the displacement of said median portion (8) from the "extended" position thereof to the "retracted" position thereof drives the movement of said first transverse barrier (5B) from the "closed" position thereof to the "open" position thereof, and vice-versa.

2. Dock (1) according to claim 1, **characterised in that** in order to switch from the "retracted" position thereof to the "extended" position thereof , the median portion (8) is displaced parallel to itself from the front to the back of the dock (1) and downwards and conversely in order to switch from the "extended" position thereof to the "retracted" position thereof.

3. Dock (1) according to claim 2, **characterised in that** it comprises at least one first arm (11) hinged about a horizontal axis at one of the ends thereof to the front lateral edge (81) of the median portion (8) and at the other end to the front of the floor (6), and a second arm (12) hinged about a horizontal axis at one of the ends thereof to the rear lateral edge (82) of the median portion (8) and at the other end to the rear of the floor (6), such that the centres of the hinges situated at the ends of the first and second arms (11, 12) determine the apexes of a deformable parallelogram.

4. Dock (1) according to any one of claims 1 to 3, **characterised in that** it comprises return means configured such that the median portion (8) is normally in the "expanded" position.

5. Dock (1) according to any one of claims 1 to 4, **characterised in that** the drive means (13) comprise at least one first lever (14) integral with one of either the first or second arms (11, 12) of the median portion (8) of the floor (6), a second lever (15) integral with the first transverse barrier (5B) and extending perpendicularly to the axis of rotation thereof, and a first connecting rod (16) hinged at each of the ends thereof respectively to said first and second levers (14, 15) .

6. Dock (1) according to claim 5, **characterised in that** it comprises a second transverse barrier (5C) mounted such that it can pivot on the base (4) facing the first transverse barrier (5B), and **in that** the drive means (13) further comprise a third lever integral with the second transverse barrier (5C) and extending perpendicularly to the axis of rotation thereof, and a second connecting rod (17) hinged at each of the ends thereof respectively to said second and third levers (15) .

7. Dock (1) according to any one of claims 5 or 6, **characterised in that** each of the first and/or second connecting rods (16, 17) is associated with a damping member (18) guaranteeing the smooth opening/closing of the first and/or second transverse barriers (5B, 5C), in order to prevent any damage from being caused thereto.

8. Dock (1) according to claim 7, **characterised in that** each of the first and/or second connecting rods (16, 17) is separated in two parts and **in that** the associated damping member (18) comprises an elastically deformable member connecting said two parts to one another and procuring a less abrupt transmission of the movement between the levers (14, 15) and the connecting rods (16, 17) .

9. Dock (1) according to any one of claims 1 to 8, **characterised in that** the base (4) and the longitudinal barriers (5A) are dimensioned such that, when a vehicle (V) is on the dock (1), the driver of the vehicle (V) cannot pass between the vehicle (V) and the longitudinal barriers (5A).
